# EUROPEAN PATENT SPECIFICATION

(11) **EP 4 195 598 B1**
(45) Date of publication and mention of the grant of the patent: **11.02.2026**
(21) Application number: 21853497.2
(22) Date of filing: 04.08.2021
(51) Int. Cl.: H04L 12/40, H04L 12/46, H04L 9/40

(54) **IN-VEHICLE SIGNAL TRANSMISSION METHOD AND SYSTEM**
VERFAHREN UND SYSTEM ZUR SIGNALÜBERTRAGUNG IN EINEM FAHRZEUG
PROCÉDÉ ET SYSTÈME DE TRANSMISSION DE SIGNAL À L'INTÉRIEUR D'UN VÉHICULE

(30) Priority: 04.08.2020 CN 202010774079
(43) Date of publication of application: 14.06.2023
(73) Proprietor: Great Wall Motor Company Limited, Hebei 071000 (CN)
(72) Inventor: LI, Tengfei, Baoding, Hebei 071000 (CN); ZHAO, Haiyang, Baoding, Hebei 071000 (CN); WANG, Lichong, Baoding, Hebei 071000 (CN)
(74) Representative: Klunker IP Patentanwälte PartG mbB
(86) International application number: PCT/CN2021/110491
(87) International publication number: WO 2022/028453

(56) References cited:
- CN-A- 106 850 419
- CN-A- 109 089 334
- CN-A- 111 343 085
- KR-A- 20170 142 398
- US-A1- 2018 076 970
- US-A1- 2018 131 524
- US-A1- 2020 055 470
- US-A1- 2020 169 555

## Description

This application claims the benefit of the Chinese Patent Publication CN 113381918 A, entitled "Method and System for In-vehicle Signal Transmission" filed on August 04, 2020.

### TECHNICAL FIELD

The present application relates to the field of vehicle technology, and in particular, to a method and a system for in-vehicle signal transmission.

### BACKGROUND

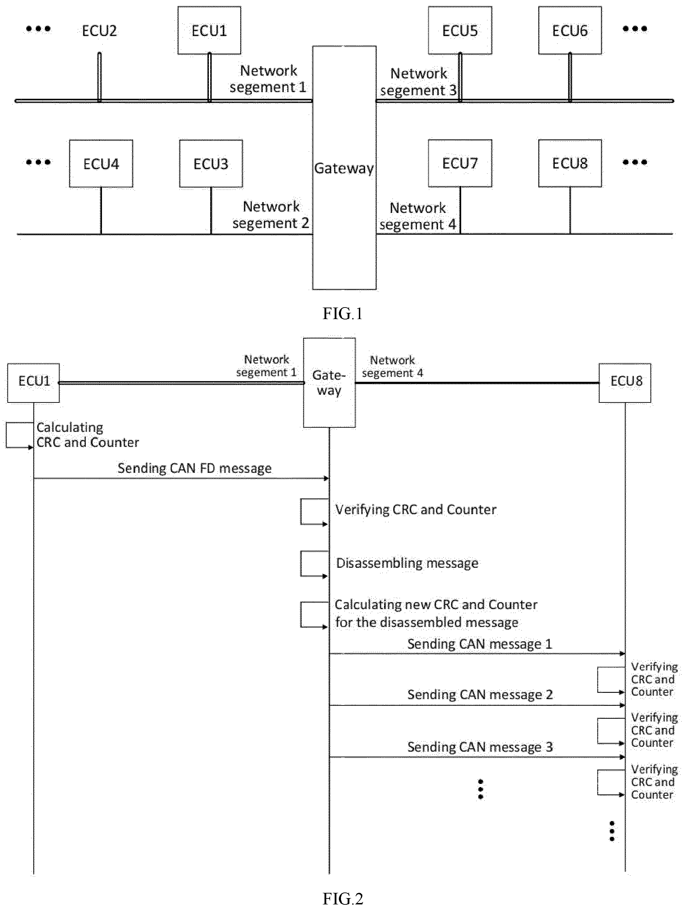

The electronic and electrical architecture in a vehicle is shown in FIG. 1, a vehicle control unit is divided into multiple network segments according to functional domains, such as, the network segments 1 to 4, the respective electronic control units (ECUs) are provided on each network segment, for example, ECU1 and ECU2 are on the network segment 1, where different network segments may use different communication protocols, such as controller area network (CAN) communication protocol or CAN with Flexible date rate (CAN FD) communication protocol, the network segments of different communication protocols are connected through a gateway, and the main function of the gateway is to route signals and messages between the network segments of different communication protocols. The functional security level in a signal transmission process has five levels from high to low: D, C, B, A and QM. If the signal transmitted in the CAN or CAN FD network segment reaches the level of A, B, C or D, protection through the E2E mechanism is required to achieve a purpose of functional security. The QM level is the lowest level, where no functional security requirement is needed.

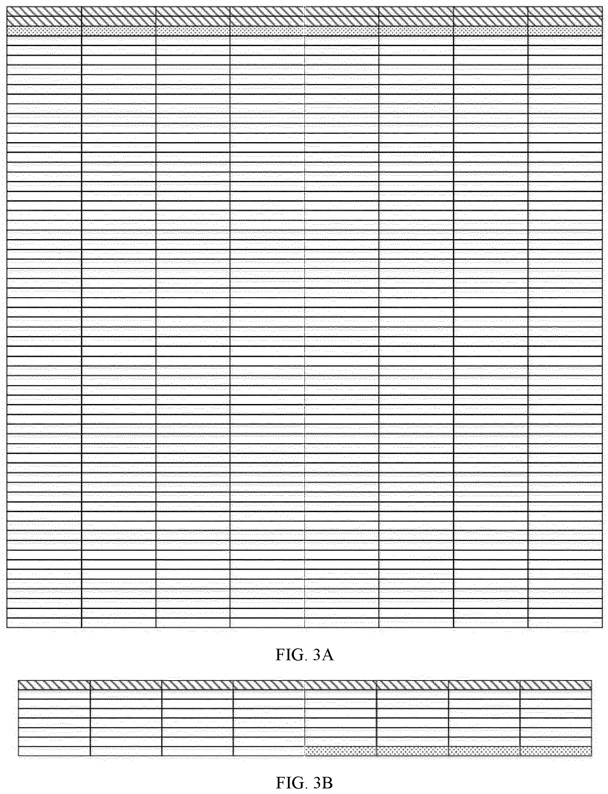

At present, the communication between the ECU in the network segment of the CAN communication protocol and the ECU in the network segment of the CAN FD communication protocol is generally implemented in the following manner: as shown in FIG. 1, taking the communication between ECU1 using the CAN FD communication protocol and ECU8 using the CAN communication protocol as an example, in a case that a signal with the functional security level of A, B, C or D is existed in the above interactive messages, as shown in FIG. 2, ECU1 needs to calculate the cyclic redundancy check (CRC) value and Counter value of the entire message (the content of the entire frame of message is protected through the E2E), and write the calculated values into the CAN FD message (64Byte in length) and then send the CAN FD written with CRC and Counter values to the network segment 1. The gateway, after receiving the CAN FD message written with CRC and Counter values from the network segment 1, first verifies whether the CRC and Counter values in the CAN FD message are correct, and then disassembles the 64Byte CAN FD message into several (the specific number depends on the functional requirements of ECU8) 8Byte CAN messages after it is verified that the CRC and Counter values are correct. After disassembly, the CRC and Counter values of CAN messages containing signals with the functional security level of A, B, C or D are calculated by the gateway, then the calculated values are written by the gateway into the corresponding CAN message, and finally the CAN message is sent by the gateway to the network segment 4 by priority (the message ID from small to large). The ECU 8, after receiving the CAN message from the network segment 4, performs a verification on the CAN message, and then processes the CAN message after the verification is successful. In this case, the message packing mode of the CAN FD message is shown in FIG. 3A, and the message packing mode of the CAN message is shown in FIG. 3B. US 2020/169555 A1 discloses a method of transmitting data from a first ECU to a second ECU through a plurality of domain gateways arranged between the two ECUs. The data is firstly transmitted in the form of CAN packet from the first ECU to a first domain gateway. The first domain gateway verifies the data and converts it into Ethernet packet and then transmits it to a second domain gateway in the form of the Ethernet packet. The second domain gateway verifies the data and converts it back to the CAN packet and then sends it to the second ECU. US 2018/076970 A1 discloses a method of transmitting data from a first end node through a gateway to a second end node. The data is sent from the first end node to the gateway in the form of CAN message and then verified and converted to Ethernet message by the gateway. Thereafter, the Ethernet message is sent to the second end node in the form of Ethernet message.

The current method for message transmission has the following problems: 1) An excessive delay of the message transmission path, the gateway needs to perform multiple calculations of CRC and Counter values after receiving the CAN messages with flexible data rate bus (CAN FD messages), resulting in the excessive delay of the path from ECU1 to ECU8, which will easily lead to a low system stability and a long delay in user operations; 2) Once the complete message protected by E2E is split or destroyed, the functional security level of the gateway is required to reach the highest level and the cost is high. In more detail, according to functional security-related requirements (refer to ISO26262), once a complete message protected by E2E is split or destroyed, the functional security level of the ECU that needs to split and destroy the message in the path needs to reach the highest level of signal in the protected message. As the gateway will play the role of splitting messages protected by E2E in existing solutions, if the vehicle signal tops out at the level D, the gateway itself needs to reach the functional security level D, which puts forward extremely high requirements for the software and hardware design of the gateway, and its cost is several times that of the QM level gateway.

### SUMMARY

### Technical Problem

An objective of embodiments of the present application is to provide a method for in-vehicle signal transmission to increase the transmission speed of the in-vehicle signal and reduce the hardware requirements of the gateway.

### Technical Solutions

The present invention is defined in the appended independent claims to which reference should be made. Advantageous features are set out in the appended dependent claims.

### Beneficial Effects

The beneficial effect in the first aspect of the embodiments of the present application is that: the message to be sent is divided into multiple signal groups at the signal sending end, each signal group is a unit, the security verification-related parameter corresponding to a signal group on which the end-to-end protection needs to be performed is determined and then written into the corresponded signal group, to generate a message in a first format, and then the generated message in the first format is sent to the gateway. The message in the first format is directly disassembled at the gateway in units of the above signal groups, to obtain messages in a second format, and then the obtained messages in the second format are sent to the signal receiving end, which improves the transmission speed of the in-vehicle signal and reduces the costs for software and hardware of the gateway.

The beneficial effect in the second aspect of the embodiments of the present application lies in improving a transmission speed of the in-vehicle signal, and reducing hardware requirements of the gateway.

The beneficial effect in the third aspect of the embodiments of the present application is the same as that in the above-mentioned first aspect, references are made to the beneficial effect as above-mentioned in the first aspect.

### BRIEF DESCRIPTION OF THE DRAWINGS

In order to illustrate the solutions in the embodiments of the present application more clearly, the following will briefly introduce the drawings that need to be used in description of the embodiments or exemplary technologies.
FIG. 1 is a diagram of an electronic and electrical architecture in a vehicle;
FIG. 2 is the flow chart of a communication method between ECU1 using the CAN FD communication protocol and ECU8 using the CAN communication protocol in FIG. 1;
FIG. 3A is a schematic diagram of a message packaging mode of a CAN FD message;
FIG. 3B is a schematic diagram of a message packaging mode of a CAN message;
FIG. 4A is a schematic diagram of a packaging mode for the CAN FD message in accordance with the present application;
FIG. 4B is a schematic diagram of a packaging mode for the CAN message with functional security requirements in accordance with the present application;
FIG. 4C is a schematic diagram of a packaging mode for the CAN messages without functional security requirements in accordance with the present application;
FIG. 5 is a flow chart of a method for in-vehicle signal transmission in accordance with the present application;
FIG. 6 is a schematic diagram of an unpacking mode of the gateway in accordance with the present application; and
FIG. 7 is a module block diagram of a system for in-vehicle signal transmission in accordance with the present application.

Listing of reference signs:
71. signal sending end; 72. gateway; 73. signal receiving end.

### DETAILED DESCRIPTION OF THE EMBODIMENTS

According to the existing technologies, at present, the transmissions for in-vehicle signals of different network segments are mainly achieved through the gateway, such as the controller area network (CAN) bus and the CAN with flexible data rate (CAN FD) bus. The CAN is used to realize a distributed control of the ECU in the vehicle. The data field length of the CAN message is at most 8Byte, and the communication rate is generally 500kbps. The data field length of the CAN FD message is at most 64Byte, and the communication rate is generally 2Mbps. The in-vehicle signal is in the CAN or CAN FD bus, having a length ranging from 1 bit to multiple bits, used to describe a specific state or physical value, such as a vehicle speed signal, a wiper status signal, and the like. In addition, the electronic control unit (ECU) that sends out the in-vehicle signal that needs to be transmitted is a microcomputer controller dedicated to the vehicle, also called a single-chip microcomputer for the vehicle. It should be understood that, the ECUs as described below all have bus communication functions. In fact, the gateway is also a kind of ECU. In the existing technologies, the gateway, after receiving the CAN FD message, needs to perform multiple calculations of the security verification-related parameters, which eventually leads to the excessive delay of the path from ECU1 to ECU8, which may easily cause system stability problems and user operation delay problems. In addition, according to functional security-related requirements (refer to ISO26262), once the structure of the complete messages or signal groups protected by E2E is split or destroyed, the functional security level of the ECU that performs the split and destroy operations on paths needs to reach the highest level of the signal in the protected message because the gateway, in the existing technology, will play the role of split messages protected by E2E. The vehicle signal tops out at the level D, the gateway itself needs to reach the functional security level D, which puts forward extremely high requirements for the software and hardware of the gateway, and its cost is several times that of the QM level gateway. The QM level indicates that E2E protection is not required. The functional security includes five levels from high to low: ASIL D, ASIL C, ASIL B, ASIL A and QM. For the signal transmitted in the CAN network segment (or CAN FD network segment), if the signal has reached any of the levels A, B, C and D, then protection through the end-to-end protection mechanism (E2E) are all needed to achieve functional security goals.

Improvements made in the present application relative to the existing technologies will be described in detail below in conjunction with multiple drawings, and the introduction is established in sequence based on a transmission direction of the in-vehicle signal sent from ECU1, via the CAN FD network segment, the gateway, the CAN network segment, to ECU8. In addition, it should be noted that in the embodiment of the present application, "signal" and "message" can be understood equally.

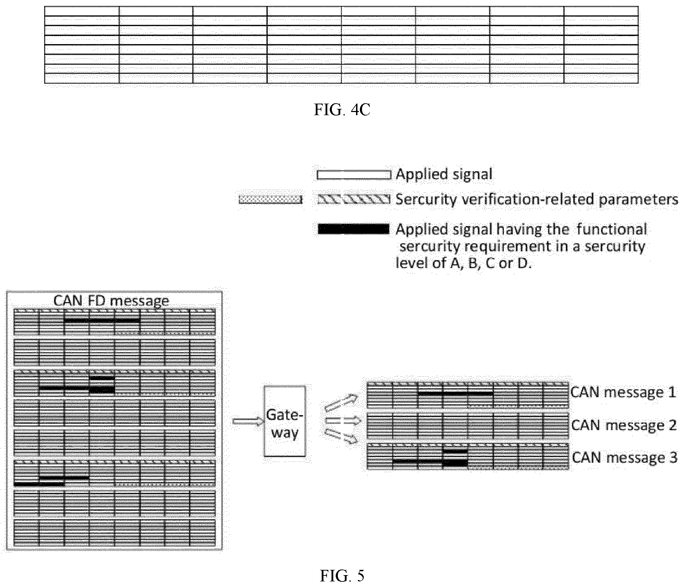

FIG. 5 is a flow chart of a method for in-vehicle signal transmission, as shown in FIG. 5, the in-vehicle signal transmission in FIG. 5 is mainly intended to a message transmission from a signal sending end in a vehicle, via a gateway, to a signal receiving end in the vehicle. In here, a collection of multiple signals in the CAN or CAN FD bus is called a frame of message, the arrangement of each signal in the message is predetermined, and the method for in-vehicle signal transmission includes steps of: obtaining and dividing, at ECU1, a message to be sent into multiple signal groups; determining security verification-related parameters corresponding to at least one signal group that needs end-to-end protection; writing the determined security verification-related parameters into the corresponded signal group(s); and then generating a message in a first format for all signal groups and sending the message in the first format to the gateway.

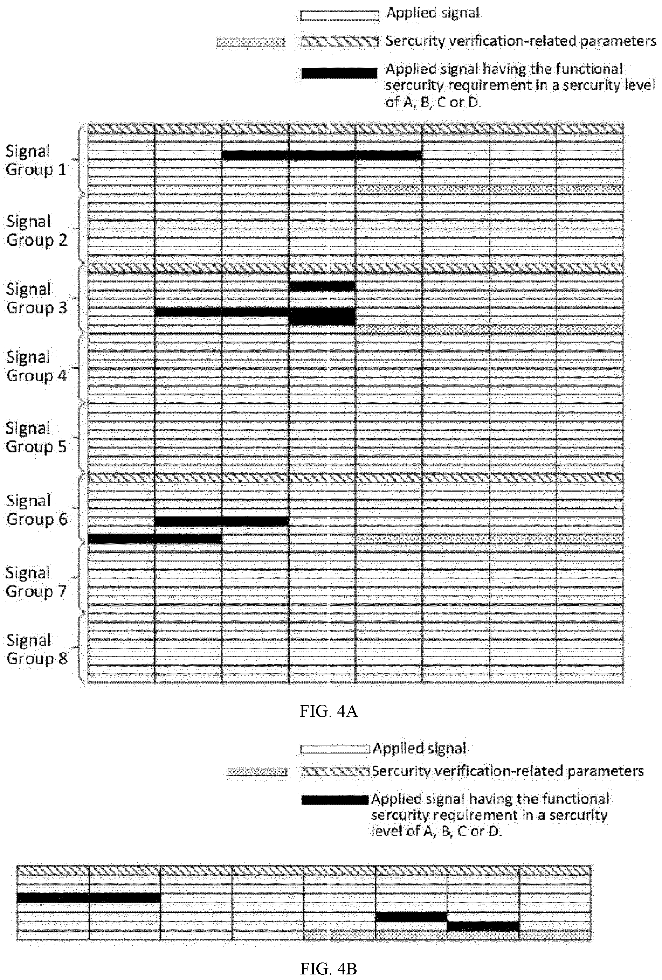

In this disclosure, a packaging mode for the CAN FD message in the first format is shown in FIG. 4A, which includes eight signal groups from signal group 1 to signal group 8. The security verification-related parameters include CRC parameters and Counter parameters. The method of verifying through the CRC parameters includes steps of: calculating a signal group by ECU1 through an algorithm to obtain a CRC parameter, and packaging the CRC parameter into a message for transmission; and verifying the signal received by a subsequent receiver using the same algorithm, if the CRC parameter received by the receiver is in consistent with the CRC parameter obtained by the receiver after verification, then it is determined that no error is existed in this signal transmission process. The method of verifying through the Counter parameter includes steps of: increasing the Counter value by 1 every time a frame of message is sent by ECU1, and packaging the Counter value into a message for transmission; verifying the Counter value in the message received by a receiver, if the Counter value is discontinuous compared with the last received message, then it is determined that a loss of message has occurred on the bus during this process.

At the gateway, the message in the first format is disassembled into a plurality of messages in the second format respectively corresponding to the signal groups in units of signal groups, and the messages in the second format are sent to the signal receiving end.

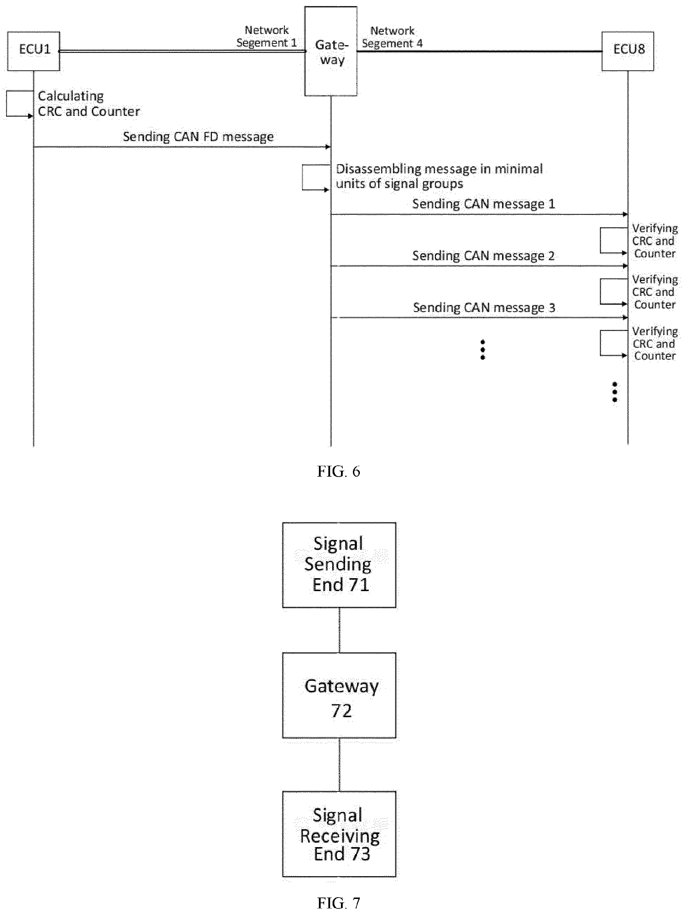

In this disclosure, a packaging mode for the CAN message in the second format is as shown in FIG. 4B and FIG. 4C, where the message shown in FIG. 4B is a CAN message with functional security requirements, and the message shown in FIG. 4C is a CAN message without functional security requirements. The difference between the two is shown in FIGS. 4B and 4C, the CAN messages with functional security requirements have parameters related to a security verification, while the CAN messages without functional security requirements have no parameters related to the security verification. Instead of performing verification on the message in the first format, the message in the first format is disassembled directly at the gateway in units of signal groups, and the disassembled messages are sent directly to ECU8 (as network segment requirement for message transmission of ECU8 is satisfied) after the disassembly is completed. In addition, an unpacking mode of the gateway is shown in FIG. 6, in which a 64Byte CAN FD message is split into multiple 8Byte CAN messages.

At ECU8, the messages in the second format with security verification-related parameters are verified to complete the transmission of the signals.

In this disclosure, the message in the second format is actually a CAN message, and the CAN message is verified at ECU 8, as can be seen from the above, the security verification-related parameters include CRC and Counter parameters. After all the messages in the second format that need to be verified are successfully verified and all the messages in the second format that do not need to be verified are successfully transmitted, the message transmission is completed. In the end, related operations are performed according to the contents of the message.

In this way, the transmission delay of route between the CAN FD network segment and the CAN network segment is compressed to the minimum, and the gateway does not need to perform a verification on the parameters related to security verification, nor does it need to calculate the new security verification-related parameters, the gateway only needs to disassemble the CAN FD message in units of signal groups to obtain the messages that can be transmitted on the CAN network segment and then transmit them to the signal receiving end. Compared with the existing technologies, the transmission delay in the present application is evidently less, specifically, the delay can be compressed to within 1 ms. In addition, to achieve security verification, the signal sending end ECU1 of the present application divides the signals to be sent in units of signal groups, so that the gateway routes to the CAN network segment without destroying the E2E protection structure, nor does it needs to recalculate the security verification-related parameters, and each of the divided signal groups is adapt to the 8Byte length message of the signal receiving end, which facilitates the verification of the messages at the signal receiving end ECU8. Based on this, the method of the present application has no functional security requirements for the gateway itself, the costs for software and hardware development are significantly reduced compared to functional security level D.

Here, it should also be emphasized that the solution of the present application is not that the ECU1 directly sends 8-byte length messages, although in this scheme, neither the E2E protection structure needs to be destroyed by the gateway, nor the CRC and Counter parameters need to be recalculated by the gateway, and the effect of reducing delay and the effect of not developing functional security can also be achieved in this scheme, the bandwidth utilization rate of CAN FD network segment, compared with the solution of the present application, will be decreased, and the communication efficiency of CAN FD bus will be reduced.

Further preferably, the security verification-related parameters are configured to be capable of indicating different security levels, such as the above-mentioned four levels A, B, C, and D, where each security level corresponds to a functional security-related requirement for the gateway. In other words, the functional security-related requirements gradually increase from level A to level D.

Further preferably, the step of obtaining and dividing a message to be sent into multiple signal groups includes: acquiring the message to be sent; and dividing the message to be sent into multiple signal groups according to a preset length. Exemplarily, the preset length may be 8Byte, and the message to be sent may be a message with a length of 64Byte.

Further, the step of sending the messages in the second format to the signal receiving end includes: obtaining, at the gateway, a priority-related parameter of the message in the first format after being disassembled; and sending the message in the first format to the signal receiving end according to the priority-related parameter. The priority-related parameter is an order of message ID in the second format from small to large, such as message 1, message 2, message 3...etc., and the message ID in the second format is obtained after the message in the first format is disassembled at the gateway. The message ID in the second format is a parameter representing a disassembly sequence or may be a pre-configured relevant parameter indicating the disassembly sequence.

Further preferably, the method for in-vehicle signal transmission further includes steps of: obtaining, at the gateway, related parameters reflecting functional requirements of the signal receiving end; and determining, according to the parameters related to the functional requirements, the number of the generated messages in the second format. For example, in case that the functional requirement of ECU8 at the signal receiving end is three messages, and the message IDs are message 1, message 2, and message 3, then the CAN FD message only needs to be disassembled into three CAN messages, as shown in FIG. 6.

The above-mentioned method for the in-vehicle signal transmission provided by the present application can rapidly transmit the in-vehicle signals from one network segment to another network segment that has a different protocol, and there is no need for the network segment to perform the steps of verifying the CRC and Counter parameters during this process, let alone a step of calculating new CRC and Counter parameters, which greatly improves the speed of signal transmission. In addition, because the above operations are not required, the gateway does not need to meet extremely high functional security requirements, which reduces the software and hardware costs of the gateway.

FIG. 7 is a module block diagram of a system for in-vehicle signal transmission of the present application, as shown in FIG. 7, the system for in-vehicle signal transmission is used for implementing a process of transmitting messages from the signal sending end 71 in the vehicle, via the gateway 72 73, to the signal receiving end in the vehicle. the system for in-vehicle signal transmission includes: a signal sending end 71, a gateway 72 and a signal receiving end 73. The signal sending end 71 is configured to obtain and divide a message to be sent into multiple signal groups, and determine security verification-related parameters corresponding to at least one signal group that needs end-to-end protection, and write the determined security verification-related parameters into the corresponded signal group(s), and then generate a message in a first format for all signal groups and send the same to the gateway 72. The gateway 72 is configured to disassemble the message in the first format into a plurality of messages in a second format respectively corresponding to the signal group in units of signal groups, and send the messages in the second format to the signal receiving end 73. The signal receiving end 73 is configured to perform a verification on the messages in the second format containing the security verification-related parameters to complete the signal transmission.

Preferably, the signal sending end 71 is configured to obtain and divide the message to be sent into multiple signal groups includes that the signal sending end 71 is configured to obtain the message to be sent, and divide the message to be sent into multiple signal groups according to a preset length.

The signal sending end 71 is configured to send the message in the first format to the gateway 72 includes that the signal sending end 71 is configured to obtain a priority-related parameter of the message in the first format after being disassembled, and send the message in the first format according to the priority-related parameter.

Preferably, the signal sending end 71 and the signal receiving end 73 are configured as electronic control units corresponding to different components of a vehicle.

In this disclosure, the system for in-vehicle signal transmission has the same advantages as the method for in-vehicle signal transmission as above-mentioned compared with the existing technologies, and will not be repeated here.

An embodiment of the present application provides a computer-readable storage medium, on which computer program instruction are stored, and the instructions are used to cause a machine to perform the method for in-vehicle signal transmission as above-mentioned.

An embodiment of the present application provides a processor which is configured to run a program, and the method for in-vehicle signal transmission is performed when the program is running.

The present application also provides a computer program product, which, when executed on a data processing device, is suitable for executing a program initialized with the steps of the method for in-vehicle signal transmission in the embodiments.

It should be understood for those skilled in the art that the embodiments of the present application may be provided as methods, systems, or computer program products. Accordingly, the present application may take the form of an entirely hardware embodiment, an entirely software embodiment, or an embodiment combining software and hardware aspects. Furthermore, the present application may take the form of a computer program product embodied on one or more computer-usable storage media (including but not limited to disk storage, CD-ROM, optical storage, etc.) having computer-usable program code embodied therein.

The present application is described with reference to flowcharts and/or block diagrams of methods, devices (systems), and computer program products according to embodiments of the present application. It should be understood that each procedure and/or block in the flowchart and/or block diagram, and a combination of procedures and/or blocks in the flowchart and/or block diagram can be realized by computer program instructions. These computer program instructions may be provided in a general-purpose computer, a special purpose computer, an embedded processor, or a processor of other programmable data processing equipment to produce a machine such that the instructions executed by the processor of the computer or other programmable data processing equipment generate devices for realizing the functions specified in one or more steps of the flowchart and/or one or more blocks of the block diagram.

These computer program instructions may also be stored in a computer-readable memory capable of directing a computer or other programmable data processing equipment to operate in a specific manner, such that the instructions stored in the computer-readable memory produce an article of manufacture including instruction devices. The instruction devices realize the function specified in one or more procedures of the flowchart and/or one or more blocks of the block diagram.

These computer program instructions may also be loaded onto a computer or other programmable data processing device, causing a series of operational steps to be performed on the computer or other programmable device to generate a computer-implemented process, thereby the instructions executed on the computer or other programmable data processing device provide steps for implementing the functions specified in one or more flows of the flowchart and/or one or more blocks of the block diagram.

In a typical configuration, a computing device includes one or more processors (CPUs), input/output interfaces, network interfaces, and a memory.

Memory may include a non-permanent storage in computer readable media, in the form of random-access memory (RAM) and/or nonvolatile memory such as read only memory (ROM) or flash RAM. The memory is an example of a computer readable medium.

Computer-readable media, including both permanent and non-permanent, removable and non-removable media, can be implemented by any method or technology for storage of information. Information may be computer readable instructions, data structures, modules of programs, or other data. Examples of computer storage media include, but are not limited to, a phase change memory (PRAM), a static random access memory (SRAM), a dynamic random access memory (DRAM), other types of random access memory (RAM), a read only memory (ROM), an electrically erasable programmable read only memory (EEPROM), a flash memory or other memory technology, a compact disc read only memory (CD-ROM), a digital versatile disc (DVD) or other optical storage, a magnetic tape cartridge, a tape magnetic disk storage or other magnetic storage device or any other non-transmission medium that can be used to store information that can be accessed by a computing device. As defined herein, the computer-readable media does not include transitory media, such as modulated data signals and carrier waves.

## Claims

1. A method for in-vehicle signal transmission, to enable a message transmission from a signal sending end (71) in a vehicle, via a gateway (72), to a signal receiving end (73) in the vehicle, and the method comprising:
obtaining and dividing, at the signal sending end (71), a message to be sent into multiple signal groups, and determining security verification-related parameters corresponding to at least one signal group that needs end-to-end protection, and writing the determined security verification-related parameters into the corresponded at least one signal group, and then generating a message in a first format for all signal groups and sending the message in the first format to the gateway (72);
disassembling, at the gateway (72), the message in the first format into a plurality of messages in a second format respectively corresponding to the signal groups in units of signal groups, and sending the messages in the second format to the signal receiving end (73); and
verifying, at the signal receiving end (73), the messages in the second format having the security verification-related parameters to complete a signal transmission,
wherein said sending the messages in the second format to the signal receiving end (73) comprising:
obtaining, at the gateway (72), a priority-related parameter of the message in the first format after the message in the first format is disassembled; and
sending, according to the priority-related parameter, the message in the first format to the signal receiving end (73),
**characterized in that** the priority-related parameter is an order of message ID in the second format from small to large, and the message ID in the second format is obtained after the message in the first format is disassembled by the gateway (72), and the message ID in the second format is a parameter representing a disassembly sequence or a pre-configured relevant parameter indicating the disassembly sequence.

2. The method for in-vehicle signal transmission according to claim 1, wherein the security verification-related parameters are configured to be capable of indicating different security levels, wherein each security level corresponds to one functional security-related requirement for the gateway (72).

3. The method for in-vehicle signal transmission according to claim 1, wherein said obtaining and dividing the message to be sent into multiple signal groups comprising:
obtaining the message to be sent; and
dividing the message to be sent into multiple signal groups according to a preset length.

4. The method for in-vehicle signal transmission according to claim 1, further comprising:
obtaining, at the gateway (72), a functional requirement-related parameter of the signal receiving end (73); and
determining, according to the functional requirement-related parameter, a number of the messages in the second format generated.

5. The method for in-vehicle signal transmission according to claim 1, wherein the security verification-related parameters include cyclic redundancy check, CRC, parameters and Counter parameters; and
the messages in the second format are controller area network, CAN, messages.

6. The method for in-vehicle signal transmission according to claim 4, wherein the functional requirement-related parameter of the signal receiving end (73) is a message ID or a total number of messages pre-stored in the signal receiving end (73).

7. A system for in-vehicle signal transmission, comprising: a signal sending end (71), a gateway (72) and a signal receiving end (73), wherein:
the signal sending end (71) is configured to obtain and divide a message to be sent into multiple signal groups, determine security verification-related parameters corresponding to at least one signal group that needs end-to-end protection, and write the determine security verification-related parameters into the corresponded at least one signal group, and then generate a message in a first format for all signal groups and send the message to the gateway (72);
the gateway (72) is configured to disassemble the message in the first format into a plurality of messages in a second format corresponding to the signal groups in units of signal groups respectively, and send the messages in the second format to the signal receiving end (73); and
the signal receiving end (73) is configured to verify the messages in the second format having the security verification-related parameters to complete a signal transmission,
wherein the gateway (72) is configured to send the messages in the second format to the signal receiving end (73) by: obtaining a priority-related parameter of the message in the first format after the message in the first format is disassembled, and sending the message in the first format according to the priority-related parameter,
**characterized in that** the priority-related parameter is an order of message ID in the second format from small to large, and the message ID in the second format is obtained after the message in the first format is disassembled by the gateway (72), and the message ID in the second format is a parameter representing a disassembly sequence or a pre-configured relevant parameter indicating the disassembly sequence.

8. The system for in-vehicle signal transmission according to claim 7, wherein the signal sending end (71) is configured to obtain and divide the message to be sent into multiple signal groups comprises: to obtain the message to be sent, and divide the message to be sent into multiple signal groups according to a preset length.

9. The system for in-vehicle signal transmission according to claim 7, wherein the signal sending end (71) and the signal receiving end (73) are configured as electronic control units corresponding to different components of a vehicle.

10. The system for in-vehicle signal transmission according to claim 7, wherein the security verification-related parameters are configured to be capable of indicating different security levels, wherein each security level corresponds to one functional security-related requirement for the gateway (72).

11. The system for in-vehicle signal transmission according to claim 7, wherein the gateway (72) is configured to obtain a functional requirement-related parameter of the signal receiving end (73), and determine a number of the generated messages in the second format according to the functional requirement-related parameter.

12. A non-transitory computer-readable storage medium, on which computer program instructions are stored, wherein the instructions are used to cause a machine to perform the method for in-vehicle signal transmission according to any one of claims 1-6.

## Patentansprüche

1. Verfahren zur fahrzeuginternen Signalübertragung, um eine Nachrichtenübertragung von einem Signalsendeende (71) in einem Fahrzeug über ein Gateway (72) zu einem Signalempfangsende (73) in dem Fahrzeug zu ermöglichen, wobei das Verfahren aufweist:
Erhalten und Aufteilen, am Signalsendeende (71), einer zu sendenden Nachricht in mehrere Signalgruppen, und Bestimmen sicherheitsverifikationsbezogener Parameter, die wenigstens einer Signalgruppe entsprechen, die einen Ende-zu-Ende-Schutz benötigt, und Schreiben der bestimmten sicherheitsverifikationsbezogenen Parameter in die entsprechende wenigstens eine Signalgruppe, und dann Erzeugen einer Nachricht in einem ersten Format für alle Signalgruppen und Senden der Nachricht in dem ersten Format an das Gateway (72);
Zerlegen, am Gateway (72), der Nachricht in dem ersten Format in eine Vielzahl von Nachrichten in einem zweiten Format, die den Signalgruppen jeweils in Einheiten von Signalgruppen entsprechen, und Senden der Nachrichten in dem zweiten Format an das Signalempfangsende (73); und
Verifizieren, am Signalempfangsende (73), der Nachrichten in dem zweiten Format, die die sicherheitsverifikationsbezogenen Parameter aufweisen, um eine Signalübertragung zu vervollständigen,
wobei das Senden der Nachrichten in dem zweiten Format an das Signalempfangsende (73) aufweist:
Erhalten, am Gateway (72), eines prioritätsbezogenen Parameters der Nachricht in dem ersten Format, nachdem die Nachricht in dem ersten Format zerlegt wurde; und
Senden, gemäß dem prioritätsbezogenen Parameter, der Nachricht in dem ersten Format an das Signalempfangsende (73),
**dadurch gekennzeichnet, dass** der prioritätsbezogene Parameter eine Reihenfolge der Nachrichten-ID im zweiten Format von klein nach groß ist, und die Nachrichten-ID im zweiten Format erhalten wird, nachdem die Nachricht in dem ersten Format durch das Gateway (72) zerlegt wurde, und die Nachrichten-ID im zweiten Format ein Parameter ist, der eine Zerlegungssequenz darstellt, oder ein vorkonfigurierter relevanter Parameter ist, der die Zerlegungssequenz angibt.

2. Verfahren zur fahrzeuginternen Signalübertragung nach Anspruch **1,** wobei die sicherheitsverifikationsbezogenen Parameter so konfiguriert sind, dass sie unterschiedliche Sicherheitsstufen anzeigen können, wobei jede Sicherheitsstufe einer funktionssicherheitsbezogenen Anforderung für das Gateway (72) entspricht.

3. Verfahren zur fahrzeuginternen Signalübertragung nach Anspruch 1, wobei das Erhalten und Aufteilen der zu sendenden Nachricht in mehrere Signalgruppen aufweist:
Erhalten der zu sendenden Nachricht; und
Aufteilen der zu sendenden Nachricht in mehrere Signalgruppen gemäß einer vorgegebenen Länge.

4. Verfahren zur fahrzeuginternen Signalübertragung nach Anspruch 1, ferner aufweisend:
Erhalten, am Gateway (72), eines funktionsanforderungsbezogenen Parameters des Signalempfangsendes (73); und
Bestimmen, gemäß dem funktionsanforderungsbezogenen Parameter, einer Anzahl der erzeugten Nachrichten in dem zweiten Format.

5. Verfahren zur fahrzeuginternen Signalübertragung nach Anspruch 1, wobei die sicherheitsverifikationsbezogenen Parameter Parameter der zyklischen Redundanzprüfung, CRC, und Zählerparameter aufweisen; und
die Nachrichten in dem zweiten Format Controller-Area-Network-, CAN-, Nachrichten sind.

6. Verfahren zur fahrzeuginternen Signalübertragung nach Anspruch 4, wobei der funktionsanforderungsbezogene Parameter des Signalempfangsendes (73) eine Nachrichten-ID oder eine Gesamtanzahl von Nachrichten ist, die in dem Signalempfangsende (73) vorab gespeichert sind.

7. System zur fahrzeuginternen Signalübertragung, aufweisend: ein Signalsendeende (71), ein Gateway (72) und ein Signalempfangsende (73), wobei:
das Signalsendeende (71) ausgebildet ist, eine zu sendende Nachricht zu erhalten und in mehrere Signalgruppen aufzuteilen, sicherheitsverifikationsbezogene Parameter zu bestimmen, die wenigstens einer Signalgruppe entsprechen, die einen Ende-zu-Ende-Schutz benötigt, und die bestimmten sicherheitsverifikationsbezogenen Parameter in die entsprechende wenigstens eine Signalgruppe zu schreiben, und dann eine Nachricht in einem ersten Format für alle Signalgruppen zu erzeugen und die Nachricht an das Gateway (72) zu senden;
das Gateway (72) ausgebildet ist, die Nachricht in dem ersten Format in eine Vielzahl von Nachrichten in einem zweiten Format, die den Signalgruppen jeweils in Einheiten von Signalgruppen entsprechen, zu zerlegen, und die Nachrichten in dem zweiten Format an das Signalempfangsende (73) zu senden; und
das Signalempfangsende (73) ausgebildet ist, die Nachrichten in dem zweiten Format, die die sicherheitsverifikationsbezogenen Parameter aufweisen, zu verifizieren, um eine Signalübertragung zu vervollständigen,
wobei das Gateway (72) ausgebildet ist, die Nachrichten in dem zweiten Format an das Signalempfangsende (73) zu senden durch: Erhalten eines prioritätsbezogenen Parameters der Nachricht in dem ersten Format, nachdem die Nachricht in dem ersten Format zerlegt wurde, und Senden der Nachricht in dem ersten Format gemäß dem prioritätsbezogenen Parameter,
**dadurch gekennzeichnet, dass** der prioritätsbezogene Parameter eine Reihenfolge der Nachrichten-ID im zweiten Format von klein nach groß ist, und die Nachrichten-ID im zweiten Format erhalten wird, nachdem die Nachricht in dem ersten Format durch das Gateway (72) zerlegt wurde, und die Nachrichten-ID im zweiten Format ein Parameter ist, der eine Zerlegungssequenz darstellt, oder ein vorkonfigurierter relevanter Parameter ist, der die Zerlegungssequenz angibt.

8. System zur fahrzeuginternen Signalübertragung nach Anspruch 7, wobei das Signalsendeende (71) ausgebildet ist, die zu sendende Nachricht zu erhalten und in mehrere Signalgruppen aufzuteilen, aufweisend: die zu sendende Nachricht zu erhalten, und die zu sendende Nachricht in mehrere Signalgruppen gemäß einer vorgegebenen Länge aufzuteilen.

9. System zur fahrzeuginternen Signalübertragung nach Anspruch 7, wobei das Signalsendeende (71) und das Signalempfangsende (73) als elektronische Steuergeräte ausgebildet sind, die unterschiedlichen Komponenten eines Fahrzeugs entsprechen.

10. System zur fahrzeuginternen Signalübertragung nach Anspruch 7, wobei die sicherheitsverifikationsbezogenen Parameter so konfiguriert sind, dass sie unterschiedliche Sicherheitsstufen anzeigen können, wobei jede Sicherheitsstufe einer funktionssicherheitsbezogenen Anforderung für das Gateway (72) entspricht.

11. System zur fahrzeuginternen Signalübertragung nach Anspruch 7, wobei das Gateway (72) ausgebildet ist, einen funktionsanforderungsbezogenen Parameter des Signalempfangsendes (73) zu erhalten, und eine Anzahl der erzeugten Nachrichten in dem zweiten Format gemäß dem funktionsanforderungsbezogenen Parameter zu bestimmen.

12. Nichtflüchtiges computerlesbares Speichermedium, auf dem Computerprogrammanweisungen gespeichert sind, wobei die Anweisungen dazu verwendet werden, eine Maschine zu veranlassen, das Verfahren zur fahrzeuginternen Signalübertragung nach einem der Ansprüche 1-6 auszuführen.

## Revendications

1. Procédé pour la transmission de signaux à l'intérieur d'un véhicule, pour permettre une transmission de messages depuis une extrémité d'envoi de signal (71) à l'intérieur d'un véhicule, via une passerelle (72), jusqu'à une extrémité de réception de signal (73) à l'intérieur du véhicule, et le procédé comprenant :
l'obtention et la division, au niveau de l'extrémité d'envoi de signal (71), d'un message à envoyer selon de multiples groupes de signaux, et la détermination de paramètres rapportés à une vérification de sécurité qui correspondent à au moins un groupe de signaux qui a besoin d'une protection de bout en bout, et l'écriture des paramètres rapportés à la vérification de sécurité déterminés à l'intérieur de l'au moins un groupe de signaux en correspondance, puis la génération d'un message selon un premier format pour tous les groupes de signaux et l'envoi du message selon le premier format sur la passerelle (72) ;
le désassemblage, au niveau de la passerelle (72), du message selon le premier format selon une pluralité de messages selon un second format qui correspondent respectivement aux groupes de signaux selon des unités de groupes de signaux, et l'envoi des messages selon le second format sur l'extrémité de réception de signal (73) ; et
la vérification, au niveau de l'extrémité de réception de signal (73), du fait que les messages selon le second format comportent les paramètres rapportés à la vérification de sécurité afin de parachever une transmission de signaux,
dans lequel ledit envoi des messages selon le second format sur l'extrémité de réception de signal (73) comprend :
l'obtention, au niveau de la passerelle (72), d'un paramètre rapporté à une priorité du message selon le premier format après que le message selon le premier format a été désassemblé ; et
l'envoi, conformément au paramètre rapporté à la priorité, du message selon le premier format sur l'extrémité de réception de signal (73),
**caractérisé en ce que** le paramètre rapporté à la priorité est un ordre d'identification/ID de message selon le second format de petit à grand, et l'ID de message selon le second format est obtenue après que le message selon le premier format a été désassemblé par la passerelle (72), et l'ID de message selon le second format est un paramètre qui représente une séquence de désassemblage ou un paramètre pertinent préconfiguré qui indique la séquence de désassemblage.

2. Procédé pour la transmission de signaux à l'intérieur d'un véhicule selon la revendication 1, dans lequel les paramètres rapportés à la vérification de sécurité sont configurés pour pouvoir indiquer différents niveaux de sécurité, et dans lequel chaque niveau de sécurité correspond à une exigence fonctionnelle rapportée à la sécurité pour la passerelle (72).

3. Procédé pour la transmission de signaux à l'intérieur d'un véhicule selon la revendication 1, dans lequel lesdites obtention et division du message à envoyer selon de multiples groupes de signaux comprennent :
l'obtention du message à envoyer ; et
la division du message à envoyer selon de multiples groupes de signaux conformément à une longueur prédéfinie.

4. Procédé pour la transmission de signaux à l'intérieur d'un véhicule selon la revendication 1, comprenant en outre :
l'obtention, au niveau de la passerelle (72), d'un paramètre rapporté à une exigence fonctionnelle de l'extrémité de réception de signal (73) ; et
la détermination, conformément au paramètre rapporté à l'exigence fonctionnelle, d'un nombre des messages qui sont générés selon le second format.

5. Procédé pour la transmission de signaux à l'intérieur d'un véhicule selon la revendication 1, dans lequel :
les paramètres rapportés à la vérification de sécurité incluent des paramètres de contrôle de redondance cyclique, CRC, et des paramètres de compteur ; et
les messages selon le second format sont des messages de réseau de multiplexage CAN.

6. Procédé pour la transmission de signaux à l'intérieur d'un véhicule selon la revendication 4, dans lequel le paramètre rapporté à l'exigence fonctionnelle de l'extrémité de réception de signal (73) est une identification/ID de message ou un nombre total de messages qui sont préstockés dans l'extrémité de réception de signal (73).

7. Système pour la transmission de signaux à l'intérieur d'un véhicule, comprenant :
une extrémité d'envoi de signal (71), une passerelle (72) et une extrémité de réception de signal (73) ;
dans lequel :
l'extrémité d'envoi de signal (71) est configurée pour obtenir et diviser un message à envoyer selon de multiples groupes de signaux, pour déterminer des paramètres rapportés à une vérification de sécurité qui correspondent à au moins un groupe de signaux qui a besoin d'une protection de bout en bout, et pour écrire les paramètres rapportés à la vérification de sécurité déterminés à l'intérieur de l'au moins un groupe de signaux en correspondance, puis pour générer un message selon un premier format pour tous les groupes de signaux et pour envoyer le message sur la passerelle (72) ;
la passerelle (72) est configurée pour désassembler le message selon le premier format selon une pluralité de messages selon un second format qui correspondent respectivement aux groupes de signaux selon des unités de groupes de signaux, et pour envoyer les messages selon le second format sur l'extrémité de réception de signal (73) ; et
l'extrémité de réception de signal (73) est configurée pour vérifier que les messages selon le second format comportent les paramètres rapportés à la vérification de sécurité afin de parachever une transmission de signaux,
dans lequel la passerelle (72) est configurée pour envoyer les messages selon le second format sur l'extrémité de réception de signal (73) en :
obtenant un paramètre rapporté à une priorité du message selon le premier format après que le message selon le premier format a été désassemblé ; et en
envoyant le message selon le premier format conformément au paramètre rapporté à la priorité,
**caractérisé en ce que** le paramètre rapporté à la priorité est un ordre d'identification/ID de message selon le second format de petit à grand, et l'ID de message selon le second format est obtenue après que le message selon le premier format a été désassemblé par la passerelle (72), et l'ID de message selon le second format est un paramètre qui représente une séquence de désassemblage ou un paramètre pertinent préconfiguré qui indique la séquence de désassemblage.

8. Système pour la transmission de signaux à l'intérieur d'un véhicule selon la revendication 7, dans lequel le fait que l'extrémité d'envoi de signal (71) soit configurée pour obtenir et diviser le message à envoyer selon de multiples groupes de signaux comprend :
l'obtention du message à envoyer ; et
la division du message à envoyer selon de multiples groupes de signaux conformément à une longueur prédéfinie.

9. Système pour la transmission de signaux à l'intérieur d'un véhicule selon la revendication 7, dans lequel l'extrémité d'envoi de signal (71) et l'extrémité de réception de signal (73) sont configurées en tant qu'unités de commande électronique qui correspondent à différents composants d'un véhicule.

10. Système pour la transmission de signaux à l'intérieur d'un véhicule selon la revendication 7, dans lequel les paramètres rapportés à la vérification de sécurité sont configurés pour pouvoir indiquer différents niveaux de sécurité, et dans lequel chaque niveau de sécurité correspond à une exigence fonctionnelle rapportée à la sécurité pour la passerelle (72).

11. Système pour la transmission de signaux à l'intérieur d'un véhicule selon la revendication 7, dans lequel la passerelle (72) est configurée pour obtenir un paramètre rapporté à une exigence fonctionnelle de l'extrémité de réception de signal (73), et pour déterminer un nombre des messages générés selon le second format conformément au paramètre rapporté à l'exigence fonctionnelle.

12. Support de stockage lisible par ordinateur non transitoire, sur lequel des instructions de programme informatique sont stockées, dans lequel les instructions sont utilisées pour forcer une machine à réaliser le procédé pour la transmission de signaux à l'intérieur d'un véhicule selon l'une quelconque des revendications 1 à 6.
